# EUROPEAN PATENT SPECIFICATION

(11) **EP 1 800 104 B1**
(45) Date of publication and mention of the grant of the patent: **17.08.2016**
(21) Application number: 05784076.1
(22) Date of filing: 16.09.2005
(51) Int. Cl.: G01N 1/06, G01N 1/42

(54) **CRYOSTAT HAVING SEPARATE COOLING CIRCUITS FOR COOLING THE CHAMBER AND A SAMPLE HOLDER**
KRYOSTAT MIT GETRENNTEN KÜHLKREISLÄUFEN ZUR KÜHLUNG DER KAMMER UND EINES PROBENHALTERS
CRYOSTAT COMPRENANT DES CIRCUITS DE REFROIDISSEMENT SEPARES AFIN DE REFROIDIR LA CHAMBRE ET UN PORTE-ECHANTILLON

(30) Priority: 16.09.2004 GB 0420657
(43) Date of publication of application: 27.06.2007
(73) Proprietor: Thermo Shandon Limited, Runcorn, Cheshire WA7 1TA (GB)
(72) Inventor: VICAR, David Michael, Warrington, Cheshire WA5 3NL (GB); DAWSON, Graham Robert, Crewe, Cheshire CW1 3BA (GB); BARRATT, Mark Stuart, Wallasey, Merseyside CH45 5BP (GB); COX, John Barrand, Abbots Langley, Hertfordshire WD5 0BE (GB)
(74) Representative: Hackney, Nigel John
(86) International application number: PCT/GB2005/003583
(87) International publication number: WO 2006/030231

(56) References cited:
- DE-B- 1 234 045
- GB-A- 1 204 546
- GB-A- 1 518 792
- US-A- 3 209 821
- US-A- 3 218 896
- US-A- 3 456 538
- US-A- 5 960 640
- US-B1- 6 178 757

## Description

The present invention relates to cryostat microtomes, sometimes known as cryostats or cryotomes.

Cryostats are apparatus for maintaining a constant low temperature below 0°C. They are useful for freezing and sectioning samples such as tissue samples for subsequent analysis. One kind of cryostat includes a chamber for housing samples and equipment and the temperature in the chamber is regulated by cooling the air through an evaporator coil.

Microtomes are instruments for cutting sections of a specimen for subsequent analysis. Typically a solid sample is held on a sample stage and the sample stage is moved up and down over a fixed cutting blade to produce sections.

Cryostat microtomes are designed for cutting objects which are cooled to a predetermined temperature. Typically the temperature is in the range of -10°C to -50°C.

A cryostat microtome includes a cooled sample stage onto which can be mounted the sample which is to be sectioned. DE-A-1234045 discloses such a cryostat microtome.

Typically, the cutting blade is fixed and it is only the sample stage and its associated mechanism that is moved.

The sample stage and cutting device are usually housed within the cooling chamber of the cryostat. The temperature inside the cooling chamber can be controlled, for example to temperatures as low as -50°C.

At temperatures as low as -50°C, samples such as tissue samples are frozen solid and can therefore be cut by the fixed cutting blade. Temperature regulation within the cooling chamber is therefore important to ensure accurate cutting and to avoid damage to the sample.

Prior to placing the sample (e.g. a tissue sample) on the sample stage, it is necessary to freeze the sample. This is typically done by placing the sample on a sample holder (sometimes known as a cryocassette) and then placing the sample holder on a sample cooling device known as a freezing plate or a cryobar.

A cryobar is usually a metal block having one or more refrigerant pipes passing through it. The flow of refrigerant through the pipes cools the metal block which in turn cools any samples placed on the upper surface of the metal block.

A supporting media (sometimes referred to as a cryomatrix) is often added to the sample and sample holder when they are placed on the freezing plate. This is an embedding resin that supports the specimen and bonds it to the sample holder when frozen.

Traditionally, cryostat microtomes use a single compressor to control both the temperature within the cooling chamber and the temperature of the freezing plate. An evaporator system is usually used. Typically, air temperatures within the cooling chamber of between 0° and -35°C can be achieved. Since the freezing plate is part of the refrigeration system controlling the cooling chamber temperature, its own temperature cannot be independently controlled.

In addition to the technique of placing the sample or sample holder on a freezing plate to freeze it, it is also known to use freeze sprays and/or peltier units to give an additional "boost" to the sample. For example, cooling a further -20°C may be possible with a peltier unit. However, both these techniques have limitations in terms of their extra cooling ability, and in the case of peltiers, a separate peltier is needed for each sample position if multiple samples are to be cooled simultaneously.

The present inventors have noted that freezing plates tend to become frosted when exposed to air, for example when the cooling chamber is opened to work with a specimen. This is because moisture in air condenses on the cold freezing plate and a layer of ice is formed. This can markedly reduce the efficiency of the freezing plate, meaning that it can take much longer to cool a specimen when frosting has occurred. The present inventors have also noted that the efficiency of heat transfer from a specimen holder (cryocasstte) to the freezing plate is lower than it might otherwise be because imperfections on the surface of the freezing plate and/or the contact surface of the sample holder reduce the overall contact area.

In conventional microtomes, when the specimen is moved over the cutting blade the very thin section that is cut from the specimen is guided on to the back surface of the cutting blade by the action of the blade passing through the specimen.

The section can then be removed by a user for further analysis. However, the effect on the section of the blade passing through the specimen together with the fact that the section is so thin is to cause the section to curl up or roll up on the back surface of the cutting blade. This can make it difficult or impossible to analyse the section.

Therefore, it is known to include an anti-roll plate that is located on the back surface of the cutting blade. Some anti-roll plates provide a variable gap between the back surface of the cutting blade and a lower surface of the anti-roll plate so that the section can pass through the gap but once through the gap the section is prevented from rolling up by the anti-roll plate. The variable spacing is typically provided by threaded adjustors at the corners of the anti-roll plate. The spacing is often adjusted between different users.

Microtomes are often manually operated. A crank handle is normally provided and rotation of the handle drives a crankshaft which is part of the drive mechanism of the microtome. The drive mechanism converts the rotation of the crankshaft into oscillating (up and down) motion of the sample stage. The sample stage is very heavy (not least because it normally includes cooling means) and so it has a tendency, when at rest, to drop to its lowest position. This means that when the crank handle is released it will tend to continue to rotate under the weight of the microtome head until the natural rest position is reached. In order to counter this behaviour it is known to include a counterbalance to try and offset the weight of the sample stage. However, the head may move in a horizontal direction as well (e.g. towards the cutting knife) as up and down and the change in the centre of gravity of the mechanism may be enough to upset the balance.

It is therefore also known to use a friction device having a timing belt that runs around two pulleys, one of which is fixed to the driver crank shaft and one which is fixed to a free running shaft mounted between two bushes fixed in the chasis or casting of the microtome. Friction is added to this system by a spring-loaded roller which is pressed against the timing belt to produce a loading in the system, to help balance the microtome head.

### Compressors

At its most general, our first proposal is that the temperature of a cooling chamber and a sample cooling stage in a cryostat microtome should be controlled separately by providing separate cooling means to each of them. It is envisaged that this may involve providing a separate compressor for each of the cooling chamber and sample cooling stage.

Accordingly, in a first aspect the present invention provides a cryostat microtome according to claim 1.

Preferably, the sample cooling means is located within the cooling chamber.

Preferably, an advantage of providing a separate cooling fluid supply to each of the cooling chamber and the sample cooling means is that the temperature of the chamber and the sample cooling means can be controlled independently.

Furthermore, the separate sample cooling fluid supply means is preferably relatively simple, for example it may have only a short cooling fluid path. This has cost advantages, both in terms of manufacture and also maintenance.

The separate sample cooling fluid supply means can be optimised for lower cooling temperatures, compared to the cooling chamber supply means. For example, the sample cooling fluid supply means is preferably capable of cooling to temperatures in the range -30°C to -70°C, more preferably -45°C to -65°C and most preferably -55°C to-60°C.

The separate sample cooling fluid supply means preferably provides rapid cooling of the sample cooling means. Suitably, more rapid cooling is possible than when a single shared cooling fluid supply means is used to cool both the cooling chamber and the sample cooling means. A separate sample cooling fluid supply means suitably permits rapid changes in temperature; preferably up as well as down.

Rapid cooling is an advantage because if a sample (e.g. a tissue sample) is not frozen quickly enough ice artefacts can form within the sample which can make it difficult to analyse the resultant section.

Preferably the sample cooling means is a freezing plate. Freezing plates are known to those skilled in the art and have been mentioned already. A preferred freezing plate includes a block of thermally conductive material in thermal contact with the sample cooling fluid supply means. Suitably the thermally conductive material is a metal, for example aluminium or an aluminium alloy.

The cryobar preferably has a sample contact surface, typically an upward facing surface, on which samples (or sample holders or substrates) can be placed to cool them. The sample cooling surface can have any dimension suitable for its intended application. Preferably it will have sufficient area to accommodate a plurality of samples, sample holders (sample holders) or sample substrates. For example, the length and width of the sample contact surface is preferably independently selected from the range 5 to 50 cm, more preferably 5 to 30 cm. Preferably the length is in the range 10 to 30 cm. Additionally or alternatively, the width is preferably selected from the range 5 to 20 cm, more preferably 5 to 10 cm.

In this way, the number of specimens to be frozen at the same time is preferably only limited by the size of the sample contact surface.

The cooling chamber fluid supply means and the sample cooling fluid supply means preferably include a compressor system. Additionally or alternatively, they may include cooling fluid supply conduits, for example tubes or pipes for delivering cooling fluid (refrigerant) to the cooling chamber and/or sample cooling means.

The compressor system suitably includes a compressor. Any compressor known to the skilled worker may be used. It is particularly preferred that the cooling chamber fluid supply means and the sample cooling fluid supply means have separate compressors.

In preferred embodiments, the cooling chamber of the cryostat microtome is cooled by a cooling system that includes a first compressor and the sample cooling means is cooled by a cooling system that includes a second compressor.

Each of the cooling chamber fluid supply means and the sample cooling fluid supply means can independently have two or more compressors to further improve temperature control and redundancy.

The sample cooling means, which may be a freezing plate, can include one or more peltiers to provide further temperature control and improve the rate at which temperature change can be achieved.

The cryostat microtome may also include one or more further cooling fluid supply means, for example including one or more compressors, for cooling or regulating the temperature of other parts of the cryostat microtome (i.e. not the cooling chamber or sample cooling means).

For example, there may be a separate compressor for cooling the sample mounting stage of the cryostat microtome.

Suitably the cryostat microtome includes separate temperature regulation control means for controlling each of the cooling chamber and the sample cooling means. Preferably the cooling chamber fluid supply means and the sample cooling fluid supply means are controlled independently by such temperature regulation control means.

Our proposals also include a method of operating a cryostat microtome having a cooling chamber and sample cooling means, wherein the temperature of the cooling chamber and temperature of the sample cooling means are controlled separately.

The optimal and preferred features disclosed above can also apply to this method.

### Chill Plate

A low freezing point liquid can be used to cover a sample cooling surface during cooling so that heat transfer is improved and/or frosting of the sample cooling surface is reduced.

A sample cooling means may have a sample cooling surface, wherein the sample cooling means includes liquid retaining means to retain a low freezing point liquid so that it covers at least part of the sample cooling surface.

Preferably the sample cooling means is a freezing plate.

Preferably the retaining means includes a raised lip. Suitably the lip extends round the periphery of at least part and preferably all of the sample cooling surface. A low freezing point liquid can be added to the volume defined by the lip so that at least part and preferably all of the sample cooling surface is covered by the liquid. Preferably the lip has a depth in the range of 0.5 to 5 mm, more preferably 0.5 to 2 mm. A depth of 1 mm is particularly preferred.

Alternatively or additionally, the liquid retaining means may include one or more recesses or blind holes in the sample cooling surface. These recesses can then be filled or part filled with a low freezing point liquid.

The low freezing point can be any liquid having a freezing point below about -20oC. Suitably the liquid has a freezing point below about -40oC, preferably below about -60oC, more preferably below about -80oC and most preferably a freezing point below about -100oC.

In fact, any liquid with a freezing point lower than the temperature of the freezing plate could be used on the surface of the freezing plate to speed up freezing of the sample and/or slow the frosting process.

The liquid can be a single substance or a mixture of substances. In the case of mixtures it is the freezing point of the mixture that is important.

Suitably, the liquid is miscible with water. Preferably the liquid will form mixtures with water at water concentrations up to about 10 weight percent, more preferably 20 weight percent. These percentages are based on measurements at room temperature.

The liquid may include additives, for example freezing point adjusting additives. Examples of such additives include salts and low molecular weight hydrocarbons.

Preferably the liquid includes as a major component a non-toxic organic compound. Preferably it is a low molecular weight organic compound. Preferably the liquid is selected from alcohol, ether, ester, ketone, aldehyde and carboxylic acid. Alcohol is most preferred, ethanol in particular. The low freezing point liquid preferably acts as an anti-freeze. Alternatively or additionally, the low freezing point preferably acts as a thermal conductor or heat transfer agent.

The liquid will preferably sit in a thin layer on top of e.g. the freezing plate to prevent the build-up of frost (frozen water). The liquid may act as an anti-freeze because ambient water in the atmosphere will mix with the liquid rather than condensing on the exposed surface of the sample cooling means.

The liquid can act as a thermal conductor or heat transfer agent because it improves the surface contact area between the sample (or sample holder) and the sample cooling means. For example, it is very difficult to achieve a perfectly flat sample cooling surface. Furthermore, it is unlikely that a sample or sample holder would be flat and therefore the conventional method of placing the sample directly on the sample cooling surface can result in a relatively low level of mutual contact. The liquid on the sample cooling surface can "fill-in" the imperfections on the sample cooling surface and increase the contact area.

So, when a sample or sample holder (e.g. a sample holder) is placed on e.g. a freezing plate it can help optimise contact between the sample and the freezing plate. Preferably, this results in more rapid freezing.

Preferably the sample cooling means is part of a cryostat, suitably a cryostat microtome. However, the sample cooling means may also be a "bench top" sample cooling means used in open air.

Preferably the sample cooling means includes sample cooling fluid supply means for lowering the temperature of the sample cooling means. For example, the sample cooling fluid supply means may deliver a refrigerant to the sample cooling means.

In an experiment, the effectiveness of the liquid layer was tested. A freezing plate having a 1 mm lip extending around the periphery of its upper surface was used. Ethanol was added to the volume surrounded by the lip to give an alcohol layer having a depth of about 1 mm. The testing was carried out in open air (ambient temperature about 22oC). The cryobar was cooled to about -56oC and the extent of frosting was observed. The freezing plate stayed frost-free for about four hours. In contrast, where the alcohol layer was omitted about 5 mm of frost built up on the upper surface of the freezing plate in 30 minutes.

In a separate test, the speed at which a sample froze when placed on the freezing plate was observed. A comparison was made between the speed of cooling when a 1 mm ethanol layer was present and when the alcohol was omitted.

As a model for the test, a sample holder covered with a cryomatrix was used instead of an actual sample. The time taken for the cryomatrix to freeze on the sample holder was measured. The cryomatrix froze approximately three times quicker when the ethanol layer was used. In fact, about 1 ml of cryomatrix froze in approximately 20 seconds when the alcohol was present, as opposed to about one minute when there was no alcohol on the freezing plate surface.

Our proposals also include a method of cooling a sample or sample holder using a sample cooling means having a sample cooling surface, wherein a low freezing point liquid is used to cover at least part of the sample cooling surface and the sample or sample holder is placed in thermal contact with the low freezing point liquid. Preferably the contact area between the sample or sample holder and the sample cooling surface is covered by the low freezing point liquid. The optimal and preferred features described above may also apply to this method.

### Friction Generating Device

A microtome head can be balanced by providing a friction generating device having a first friction generating surface that rotates around the axis of a shaft and a second friction generating surface that does not rotate around the axis of the shaft.

A microtome may have a microtome head, a drive mechanism for moving the head, and a friction generating means for balancing the microtome head, the friction generating means being associated with a rotatable shaft of the drive mechanism, wherein the friction generating means is rotatable around the axis of the rotatable shaft when the shaft is rotated so as to move against a surface to provide resistance to rotation of the shaft.

Preferably the friction generating means is connected to the shaft so that it rotates with the shaft.

Preferably the friction generating means is connected to the shaft so that it is co-axial with the shaft.

The friction generating means may include a collar located co-axially about the shaft. Suitably the collar is fixed to the shaft and suitable fixing means include a pin or screw. Typically the shaft will have engaging means for engaging the friction generating means, for example a hole or recess for receiving a pin or screw.

Preferably the friction generating means, for example a collar, has a friction generating surface in contact with a friction generating surface of a member that does not rotate with the shaft. Friction is preferably generated when the shaft is rotated as a result of the friction generating surface moving against the non-rotating member.

The surface against which the friction generating means moves may be part of the microtome chassis. Preferably, this includes bearings and bushes located in the chassis.

The term chassis as used herein is intended to cover the structural features that provide rigidity to the microtome and to which are connected the various moving parts of the microtome. Typically the chassis of the microtome is made by casting a metal or metal alloy and so it is also known as a casting.

The friction generating means preferably includes a first member slidably axially connected to the shaft and a resilient means for urging the first member against the surface.

Preferably the friction generating means includes a second member fixed to the shaft so that the resilient means is located between the first and second members. Suitably the second member does not contact the chassis of the microtome.

The second member preferably acts as an "anchor" for the resilient means so that the force of the resilient means is directed against the first member (which is preferably axially slidable along the shaft).

Preferably this arrangement causes the first member to be pushed against the surface, e.g. a surface on part of the chassis (casting), or a bearing or bush located in the chassis.

The resilient means is preferably a spring, more preferably a helical spring.

The first member can be axially slidably connected to the shaft by, for example, a pin and corresponding slot. The pin can be on either of the first member or the shaft and the corresponding slot can be on the other component.

The first member can be a collar located co-axially about the shaft. Alternatively or additionally the second member can be a collar located co-axially about the shaft.

An advantage of this arrangement is that it is mechanically simple and therefore cheap to make and maintain. A further advantage is that it is also possible to modify an existing microtome to work with the friction generating device described herein.

A method of modifying a microtome may be to provide a friction generating means being associated with a rotatable shaft of the drive mechanism of the microtome wherein the friction generating means is rotatable about the axis of the rotatable shaft when the shaft is rotated so as to move against a surface to provide resistance to rotation of the shaft.

In an alternative arrangement the friction generating means can be an outer surface of the shaft. In this case, the surface against which the friction generating means moves is preferably an inward facing surface of a collar located co-axially about the shaft.

Preferably, the microtome is a cryostat microtome (cryostat).

Preferably the microtome does not include a spring-loaded roller and timing belt for generating friction to balance the microtome head. It is an advantage of this aspect that conventional balancing devices do not necessarily need to be used. Nevertheless, further friction generating and other balancing devices may be present.

### Touch Screen Display

A cryostat may also include a control unit with input means by which a user may input control commands in order to control the cryostat. Such an input means may include a touch screen display, in order to combine the required input functions together with one or more display functions. Typical control functions which may be included include any or all of: measured temperature within one or more regions within the cryostat; the sample cutting thickness; the specimen temperature; and the freezing plate temperature.

Preferably the display may be arranged to display different information at different times i.e. to include different available "screens". For example, the first screen which the user sees may include relatively basic information while further screens may then be selected to provide more detailed information and/or different control functions. Preferably, the control means includes security means which allows the user to input a security code via the display in order to operate the cryostat. The control means may also include the ability to configure the display to use different languages.

One of the main advantages of the touch screen is to allow the basic operation of the instrument to be controlled through one screen, and the more complex options and configuration details to be hidden on other screens. This should allow anyone to easily control the basic functions without being overwhelmed with the total number of configuration options.

The operation of the controls on the main screen are preferably through a common set of buttons and the method of adjusting the temperature set points (including chamber temperature) and cutting thickness is the same which allows a new user to easily control the instrument. The size, shape and/or location of the common set of buttons may change when the type of information displayed changes, e.g. when a different 'screen' is displayed.

### Anti-Roll Plate - Part 1

A cutting blade holder used with a microtome may have an anti-roll plate holder including means for releasably resiliently engaging an anti-roll plate. For example, the anti-roll plate holder may include a detent for holding the anti-roll plate.

An anti-roll plate holder may have an anti-roll plate receiving means and anti-roll plate engaging means wherein the anti-roll plate engaging means are resiliently moveable between a first position in which it can hold an anti-roll plate in the anti-roll plate receiving means and a second position in which it cannot hold the anti-roll plate in the anti-roll plate receiving means.

Preferably, when the anti-roll plate engaging means are in the second position the anti-roll plate can be removed from the anti-roll plate receiving means. This permits easy replacement of the anti-roll plate.

Typically the anti-roll plate is rectangular. Preferably it is transparent. It can be made of glass or plastics material.

Suitably, the anti-roll plate engaging means and the anti-roll plate receiving means co-operate to hold the anti-roll plate in the anti-roll plate receiving means.

The anti-roll plate engaging means preferably includes a resilient engagement member. Preferably the engagement member is detachable from the anti-roll plate receiving means.

Preferably, the engagement member includes one or more sprung arms for resiliently engaging the anti-roll plate. In particularly preferred embodiments the engagement member has two sprung arms. Suitably, a first sprung arm can apply a sprung force in a first direction and a second sprung arm can apply a sprung force in a second direction. Preferably the second direction is approximately orthogonal to the first direction. This arrangement preferably enables an anti-roll plate to be held in the anti-roll plate receiving means by applying a force to it into approximately orthogonal directions.

Preferably, the engagement member is made of metal. Alternatively, it can be made of a plastics material.

Preferably, the engagement member includes means by which the engagement member can be secured to the anti-roll plate receiving means. For example, said means can be a hole or aperture for receiving a fixing screw.

The anti-roll plate engaging means can include two or more resilient engagement members.

The anti-roll plate receiving means preferably includes a body having a front portion which in use is closest to the cutting edge of the cutting blade of the microtome and a rear portion. It follows that the upper portion of the body is the part that is uppermost when the anti-roll plate is in use and the lower portion is that part that is lowermost, i.e. nearest to the specimen on the back surface of the cutting blade.

Preferably, the body includes one or more stop surfaces against which the anti-roll plate rests in use. Suitably, the stop surfaces include front portion and/or rear portion stop surfaces. Preferably, the front portion includes front portion stop surfaces which abut the anti-roll plate during use.

It is preferred that the anti-roll plate engaging means hold the anti-roll plate against the front portion stop surfaces during use. For example, an engagement member can be located at the rear portion of the body of the anti-roll plate receiving means where it can apply a sprung force to the rear portion of the anti-roll plate in the direction of the front portion of the body. The resulting clamping effect preferably holds the anti-roll plate in place.

Alternatively or additionally, the rear portion of the body may include rear portion stop surfaces. The optional features of the front portion stop surfaces also apply to the rear portion stop surfaces.

Preferably the body includes one or more side portions, suitably extending between the front and rear portions. Preferably there are two side portions.

Preferably some or all of the side portions include one or more stop surfaces to hold the anti-roll plate. Suitably, the stop surfaces include one or more lower stop surfaces which preferably support the anti-roll plate during use. Alternatively or additionally, the side portions include one or more upper stop surfaces which may hold the anti-roll plate during use.

Suitably, an opposing force is applied to the anti-roll plate by the anti-roll plate engaging means during use so that the anti-roll plate is held against the upper and/or lower stop surfaces. Preferably the opposing force is provided by a sprung engagement member as discussed above, for example a sprung arm biased such that it pushes the anti-roll plate against the stop surfaces. It is preferred that the side portions each include a lower stop surface. It is also preferred that the engagement member includes a sprung arm that engages the anti-roll plate in use to push it against the lower stop surface.

Preferably the anti-roll plate receiving means is made of metal.

### Anti-Roll Plate Part 2

An anti-roll plate holder may be adapted to hold an anti-roll plate a fixed distance from the back face of a cutting blade and that the anti-roll plate holder does not have any adjustment means to alter the distance.

An anti-roll plate holder may have a fixed spacing member, said fixed 'spacing member being engageable with a back face of a cutting blade so as to space an anti-roll plate from the back face by a fixed distance.

The back surface of a cutting blade can be any surface on which a section rests after it has been cut from a specimen.

Preferably the optional and preferred features of the fifth aspect also apply to this aspect.

It is preferred that the anti-roll plate holder includes a body having one or more lower stop surfaces for supporting an anti-roll plate. Preferably, the spacing member is located on a lower portion of the body. It is particularly preferred that the spacing member is integral with the body.

The lower stop surfaces can be the fixed spacing member.

Preferably the fixed spacing member extends beneath the anti-roll plate when the anti-roll plate is in the anti-roll plate holder to provide the fixed spacing.

A spacing of about 0.05 to 0.5 mm is preferred. More preferred is a spacing of 0.05 to 0.3 mm, and a spacing of 0.15 to 0.25 mm is particularly preferred.

The inventors have found that a fixed spacing of this size is suitable for many applications.

An advantage of having fixed spacing is that the spacing cannot be inadvertently changed during use or between uses. For example, anti-roll plate holders having adjustment means for adjusting the spacing can be problematic because spacing settings can be changed by different users and it can be difficult to replicate settings.

### Sample holder

As has been previously mentioned, a cryostat may typically include a sample cooling device (such as a freezing plate) on which samples can be frozen prior to cutting. Typically, each sample is located on a sample holder (known as a sample holder).

A sample cooling device may include a plurality of cooling zones, each zone being for receipt of a respective sample holder. Preferably each cooling zone is suitably shaped (e.g. recessed), so as to receive its respective sample holder. Preferably the cooling device also includes means for identifying or labelling each of the cooling zones. Such means could, for example, include an overlay which is placed on top of the cooling device, which overlay includes a plurality of apertures, one for each of the cooling zones, so that the sample holders can still be placed in the cooling zones of the cooling device through the apertures. The overlay may then include appropriate colouring, marking or labelling so that each sample holder may be readily identified.

A sample holder may be placeable on a sample cooling device, wherein the cooling device may include additional cooling means which are locatable on top of the sample holder in use (i.e. on the upper surface of the sample holder, where the lower surface of the sample holder is resting on the cooling device). Such additional cooling means may be provided by some form of heat sink (e.g. a suitably sized metallic object) which is locatable on top of the sample holder in use. Typically, the additional cooling means will have been placed on the cooling device for some time prior to use, so that it is cooled to an appropriate temperature. Where the cooling device is to be used with a plurality of sample holders, a plurality of additional cooling means may be provided, preferably one for each sample holder.

Preferably the cooling device includes support means for supporting each of the additional cooling means, so that the additional cooling means may be easily held above a respective sample holder, spaced away from the sample holder. This enables the sample holders to be put in place easily. Preferably the weight and/or shape of the additional cooling means is such that when a user lifts the additional cooling means away from the sample plate, the support means automatically holds the additional cooling means suspended above the sample plate if the user releases it. One way of achieving this is for the support means to include a channel in which an arm may slide up and down. The arm is attached to an additional cooling means. If the arm and the channel are mutually dimensioned so that the weight of the cooling means will displace the arm in the channel until friction between the arm and the channel prevents further movement of the arm in the channel, then the additional cooling means will remain suspended until the arm is manually moved by the user. Preferably the arm includes a cylindrical member and this cylindrical member slides in a cylindrical bore connected to the channel.

A separate channel and/or a separate arm may be provided for each additional cooling means required.

### Cryostat

Embodiments of the present invention will now be described with reference to the accompanying drawings.
Fig. 1 is a perspective view of a cryostat incorporating aspects of the present invention;
Fig. 2 is a top view of the cooling chamber of the cryostat of the Fig. 1;
Fig. 3 is a perspective view of a freezing plate;
Fig. 4 is a further perspective view of a freezing plate;
Fig. 5 is a perspective view of a anti-roll plate;
Fig. 6 is a view of a spring for use in the anti-roll plate of Fig. 5;
Figs. 7 and 8 show views of a touch screen;
Fig. 9 is a schematic view of a friction device for use with a cryostat of Fig. 1.

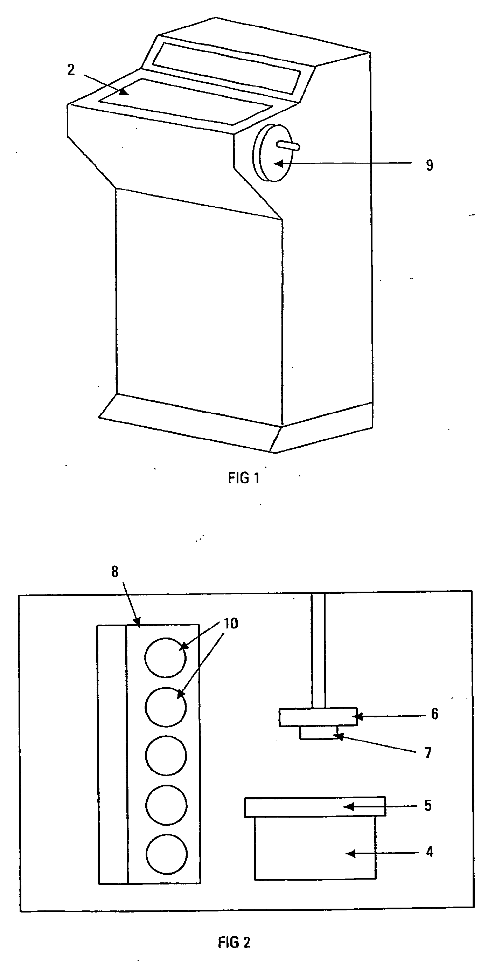

Fig. 1 shows a cryostat which includes a cooling chamber 2. The cooling chamber 2 of the cryostat generally includes a cutting blade holder 4 and a moveable sample holder 6 (not seen in Figure 1 but illustrated in Fig. 2). The blade holder 4 holds blade 5 and, in use, the sample holder 6 is moved up and down against the blade 5 so as to cut slices from the sample 7. The user moves the sample holder 6 using handle 9. Usually in the cooling chamber 2 is also a storage area for samples, in this case a freezing plate 8 on which one or more sample holders 10 may be located.

According to the present invention, the cryostat includes two separate cooling means, which are not shown in these Figures. One of the cooling means is arranged to cool the cooling chamber 2 and the other is arranged so as to cool the freezing plate 8. In one embodiment, there may be a single cooling circuit, with e.g. a single reservoir of refrigerant, but with a separate compressor provided for each of the cooling means i.e. one compressor to control the temperature within the cooling chamber 2 and a separate compressor for the cooling circuit associated with the freezing plate 8. By the use of dual compressors it is possible to control the chamber and the freezing plate completely independently and, for example, the chamber can be kept typically in a range from -15°C to -25°C whereas the freezing plate may be kept at much lower temperatures, typically -55°C to -60°C.

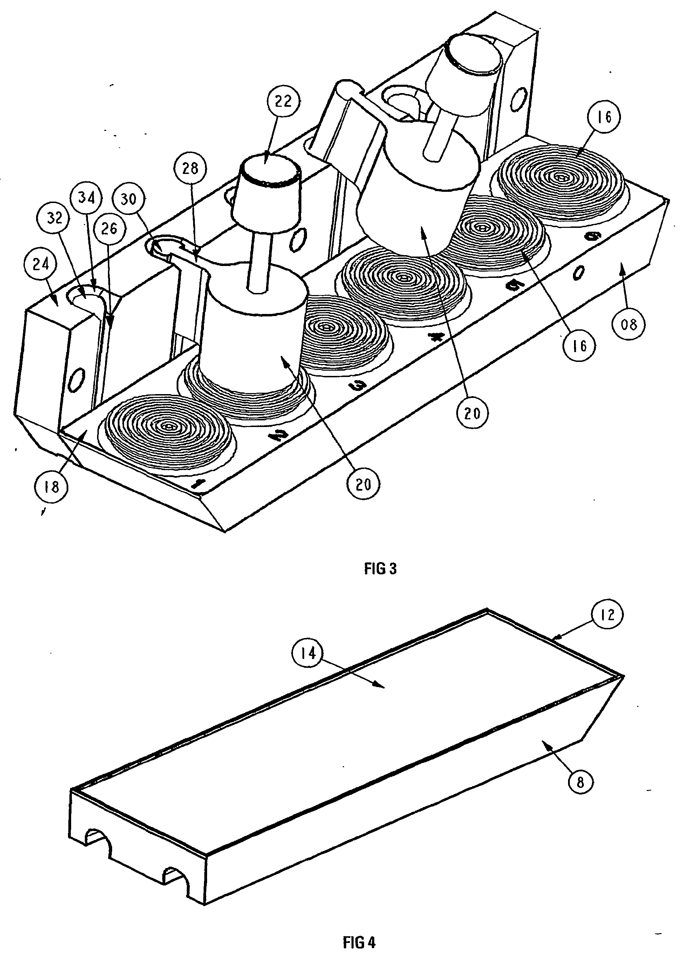

The freezing plate 8 can be more clearly seen in Figs. 3 and 4.

The freezing plate 8 includes means for retaining some liquid on the surface of the freezing plate. In this example, these means are provided by a lip 12, which rises above the upper surface 14 of the freezing plate and extends around the perimeter of the upper surface 14. Alternatively, the lip may extend around only part of the perimeter, or may enclose only part of the upper surface 14, depending on the layout of the freezing plate. In use, a liquid with a low freezing point (such as an alcohol, e.g. methanol or ethanol) is placed on the upper surface of the freezing plate. This liquid will sit in a thin layer on top of the freezing plate where it will prevent or reduce frost build up. Also, when a sample holder is placed on top of the freezing plate, it will help to ensure optimum contact with the freezing plate and enhance the cooling/freezing of the sample on the sample holder.

Optionally the height of the lip above the other surface of the freezing plate is approximately 1mm, but the choice of lip depth and liquid depth may vary with the required application.

It may be desirable to have a method of reducing frost build up on the freezing plate and/or a method of improving the cooling performance of the freezing plate, wherein the method includes the step of applying a liquid to the surface of a freezing plate, which liquid has a freezing point lower than the operating temperature of the freezing plate.

The freezing plate shown in Figure 3 incorporates at least two further features. Firstly, placed on the upper surface of the freezing plate are a number of (in this case six) sample holders 16. Also placed or located on the upper surface of the freezing.plate is a location sheet 18. The location sheet 18 includes a number of suitably sized apertures (in this case six), one for each of the sample holders 16. Each sample holder 16 can therefore be placed through one of the apertures in the location sheet 18 and still sit directly on the freezing plate (or wholly or partially on a layer of liquid on the upper surface of the freezing plate, as described above). The location sheet incorporates means for identifying each of the sample holders. In this case, the means for identifying is provided by numbering each of the apertures (1 to 6), but additionally or alternatively the identifying means could be letters or colours or any other suitable means. This enables the user to avoid mixing up the sample holders and associated samples, which of course could be disastrous. The location sheet may be made of any suitable material, such as polyester.

The sample holder may also include one or more additional cooling means and in this example two heat sinks 20 are shown. Preferably there will be one heat sink 20 for each of the sample holder locations i.e. in this case six. The heat sink 20 is essentially just a suitably sized object which can be cooled (e.g. by resting it on a freezing plate or other means) and placed on the upper surface of the sample i.e. that part of the sample away from the sample holder on which it sits. This helps speed up the cooling/freezing of the sample, reducing the likelihood of the problems previously explained such as ice forming in the sample tissue. Each heat sink 20 may be made of an appropriate material and given the required size and mass to suit the particular sample freezing requirements. In this case, each heat sink is approximately cylindrical and is made of metal. Each heat sink includes a handle 22 (a knob in this case) by which the user may more easily lift the heat sink away from the upper surface of the freezing plate).

The freezing plate also includes means for supporting the heat sink(s) away from the upper surface of the freezing plate so as to facilitate placing and removal of the sample holders. In this example, the means include a side mounting plate 24, which may be made of an insulating material. The side mounting plate 24 includes one or more slots 26 (in this case six slots i.e. one per heat sink 20). Each slot extends perpendicular to the upper surface of the freezing plate and is located adjacent a respective sample holder, or location where a sample holder will be placed in use. Each heat sink 20 then includes an arm 28 which extends into the slot 26 and may move up and down the slot i.e. towards and away from the upper surface of the freezing plate. The slot 26 and arm 28 maybe suitably dimensioned with respect to each other so that the weight of the heat sink 20 causes the arm 28 to "jam" in the slot 26 when released by the user, thereby suspending the heat sink 20 above its respective sample holder. By moving the heat sink 20 (and therefore the arm 28) the user may "unjam" the arm in the slot, enabling the user to move the heat sink towards or away from the freezing plate as desired. In this example, the end of the arm 28 incorporates a cylindrical portion 30 which is located in a respective cylindrical portion 32 of the slot 26.

The upper end 34 of the slot 26 maybe suitably shaped so as to facilitate easy entry of the arm 28 into the slot 26. In this example, the upper end (i.e. the end furthest away from the freezing plate) of the cylindrical part 32 of the slot is countersunk.

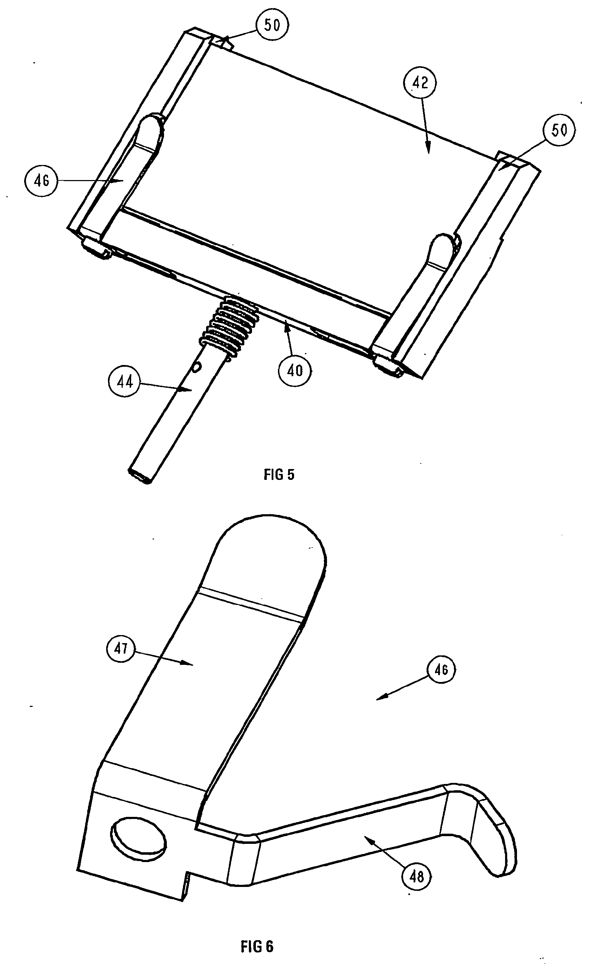

As previously mentioned, the cooling chamber includes a knife blade holder in which a knife blade may be mounted. It is known to provide a knife blade holder with an "anti-roll plate", the aim of which is to prevent a slice taken from a sample from rolling up or curling, which may make it difficult or impossible for that sample slice to be mounted on a slide for analysis. Current anti-roll plates are quite difficult and fiddly to set-up, since the angle of the anti-roll plate with respect to the blade and the distance of the anti-roll plate from the blade need to be adjusted in order to ensure effective operation of the anti-roll plate. An anti-roll plate holder that reduces some or all of these problems is shown in Figure 5.

As can be seen, the anti-roll plate holder is generally a three-sided frame 40 in which the anti-roll plate 42 is removeably locatable. Typically the anti-roll plate 42 is made of glass. The anti-roll plate holder 40 includes a shaft 44 by which, in use, it is attached to the knife blade holder (not shown). The means by which it is attached to the knife blade holder enable it to be located in the correct position with respect to the knife blade.

The anti-roll plate holder includes means for automatically locating the anti-roll plate in the correct position within the holder so that, in use, this helps to ensure that the anti-roll plate is in the correct position with respect to the blade to achieve the desired anti-roll function. In this example, the means for automatically locating the anti-roll plate in the correct position are provided by a biasing means which push the anti-roll plate into the desired location in the holder. These biasing means may be provided by one or more spring means, such as (in this case) two springs 46. Figure 6 shows a view of one of the springs 46, in this case the left spring in Figure 5.

Each spring 46 biases the anti-roll plate in two separate directions, in this example by virtue of each spring having two arms 47 and 48. Arm 47 presses the outer face (i.e. that face furthest away from the blade) of the anti-roll plate in the direction of the blade in use. By dimensioning the anti-roll plate holder appropriately, this means that the anti-roll plate will always be a fixed distance from the blade when the anti-roll plate holder is located on the knife blade holder.

The second biasing function of each spring 46 is provided, in this example, by spring arm 48 which presses the lower edge of the anti-roll plate against one or more (in this case two) stops 50. Again, this helps to hold the anti-roll plate in the correct position within the holder. The use of these springs enables the glass anti-roll plate to be removed or exchanged without the need to undo any mechanical fixings or even the use of tools. The glass anti-roll plate clips easily into position and is securely retained in the correct operating position.

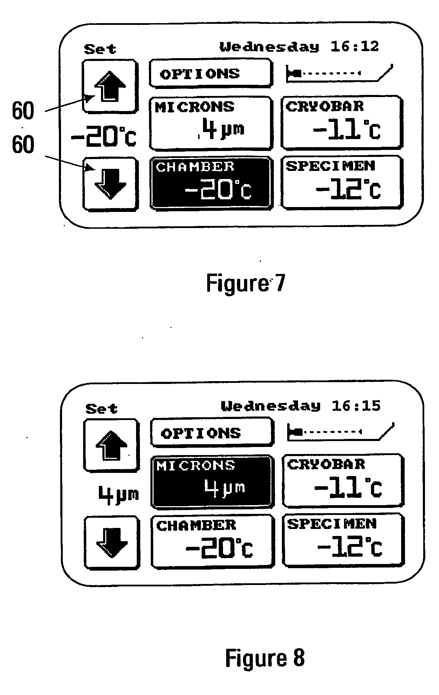

Figures 7 and 8 show examples of the touch screen display by which the cryostat may be operated. In this particular example, the display is displaying four items of information: the cutting thickness (in microns), the temperature of the freezing plate, the temperature of the chamber and the temperature of the specimen, all in degrees centigrade. There is also a pair of arrow keys 60 which the user may use to adjust whichever of the measured parameters is required. In this case, in Figure 7 the chamber temperature is selected and the arrow keys will then function to adjust the chamber temperature. In Figure 8, the cutting thickness is selected and again the arrow keys may be then used to adjust that. The display also shows an "options" key which may be used to access further functions of the cryostat or the display, as explained previously.

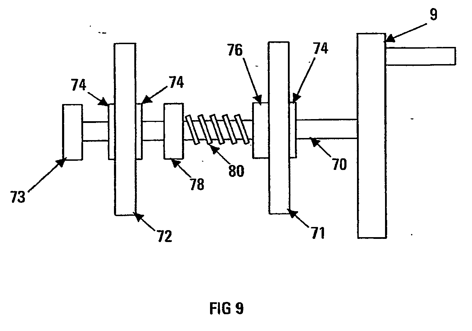

Fig. 9 shows an example which aims to help balance the weight of the microtome head. As previously explained, the microtome head 6 holds the sample 7 and is movable up and down against the blade 5 by an operator of the cryostat using, for example, rotary handle 9. Because the head has to move up and down, the weight of the head means that it tends to return to rest in its lowest position. This affects the "feel" of the machine to the operator and so this aspect of the present invention aims to provide an appropriate amount of friction in the drive mechanism which moves the microtome head so as to oppose the tendency of the microtome head to return to the lowest position. The weight of the head may also be approximately balanced out by means of a counter balance weight fitted to the drive mechanism, as known in the prior art.

Figure 9 shows handle 9 which is used to rotate shaft 70. The shaft 70 passes through various walls of the housing of the cryostat, in this case walls 71 and 72, which support the shaft 70. At the opposite end of the shaft 70 (although it may be located in any other suitable location) is a pulley 73 for a drive belt (not shown) which is then used to drive the microtome head movement mechanism.

The shaft 70 is also supported by bushes 74 as it passes through the walls 71, 72.

In this example, the desired amount of friction is provided by a friction member (in this case collar 76) which is rotated by or with the shaft and which presses against a fixed surface. In this case, the fixed surface is a part of wall 71. In this example, the collar 76 is coaxial with the shaft 70 i.e. is mounted around it, and in use rubs against the wall 71.

The collar 76 may be fixed to the shaft by any suitable means. In this example, the collar 76 is fitted to the shaft using one or more pins (not shown). Preferably, the pin or pins by which collar 76 is mounted to shaft 70 may slide in respective grooves provided in the shaft 70. This groove or grooves run in the direction of the main axis of the shaft i.e. along the length of the shaft, thereby enabling the collar 76 to move along the shaft. This enables the position of the collar 76 with respect to the shaft 70 (and therefore with respect to the friction surface of the wall 71) to be adjusted, thereby adjusting the amount of friction provided by this aspect of the invention.

As shown in Figure 9, in this example the position of the collar 76 on the shaft is determined by a further collar 78 which is fixed on the shaft and which is connected to collar 76 by a biasing means, in this case a spring 80. The spring 80 urges the collar 76 against the wall 71, providing the desired amount of friction. The amount of friction may be adjusted selecting biasing means (e.g. spring) with the required amount of biasing.

The invention may include any variations, modifications and alternative applications of the above embodiments, as would be readily apparent to the skilled person without departing from the scope of the present invention as defined by the claims.

## Claims

1. A cryostat microtome including
a cooling chamber;
a sample mounting stage and a cutting device, such that in use a sample is mounted to the sample mounting for cutting by the cutting device;
sample cooling means for cooling the sample prior to mounting on the sample mounting stage;
cooling chamber fluid supply means for lowering the temperature in the cooling chamber; and
sample cooling fluid supply means for lowering the temperature of the sample cooling means, wherein the sample cooling fluid supply means is separate from the cooling chamber fluid supply means.

2. A cryostat microtome according to Claim 1, wherein the sample cooling means is located within the cooling chamber.

3. A cryostat microtome according to Claim 1 or Claim 2, wherein sample cooling fluid supply means includes a first compressor and the cooling chamber fluid supply means includes a second compressor, separate from the first compressor.

4. A cryostat microtome according to Claim 3, wherein either or both of the cooling chamber fluid supply means and the sample cooling fluid supply means include two or more compressors.

5. A cryostat microtome according to any one of Claims 1 to 4, wherein the sample cooling fluid supply means is capable of cooling to a temperature in the range -30°C to -70°C.

6. A cryostat microtome according to Claim 5, wherein the sample cooling fluid supply means is capable of cooling to a temperature in the range -45°C to -65°C.

7. A cryostat microtome according to any one of the previous claims, wherein the sample cooling means is a freezing plate comprising a block of thermally conductive material in thermal contact with the sample cooling fluid supply means.

8. A cryostat microtome according to any one of the previous claims, wherein the cryostat microtome includes sample mounting stage fluid supply means for cooling the sample mounting stage of the microtome, wherein the sample mounting stage fluid supply means is separate from the sample cooling fluid supply means and the cooling chamber fluid supply means.

9. A cryostat microtome according to any one of the previous claims, wherein the cryostat includes cooling chamber temperature regulation control means for controlling the temperature of the cooling chamber and sample cooling temperature regulation control means for controlling the temperature of the sample cooling means, wherein the temperature of the cooling chamber and the sample cooling means can be controlled separately.

10. A method of operating a cryostat microtome as defined in any one of claims 1 to 9, wherein the temperature of the cooling chamber and the temperature of the sample cooling means are controlled separately.

## Patentansprüche

1. Kryostat-Mikrotom, das Folgendes umfasst:
eine Kühlkammer;
eine Probenfixierplattform und eine Schneidvorrichtung, sodass bei Verwendung eine Probe zum Schneiden durch die Schneidvorrichtung an der Probenfixierplattform angebracht ist;
ein Probenkühlmittel zum Kühlen der Probe vor dem Fixieren an der Probenfixierplattform;
ein Kühlkammerfluidversorgungsmittel zur Senkung der Temperatur in der Kühlkammer; und
ein Probenkühlfluidversorgungsmittel zur Senkung der Temperatur des Probenkühlmittels, worin das Probenkühlfluidversorgungsmittel von dem Kühlkammerfluidversorgungsmittel getrennt ist.

2. Kryostat-Mikrotom nach Anspruch 1, worin das Probenkühlmittel innerhalb der Kühlkammer angeordnet ist.

3. Kryostat-Mikrotom nach Anspruch 1 oder Anspruch 2, worin das Probenkühlfluidversorgungsmittel einen ersten Kompressor umfasst und das Kühlkammerfluidversorgungsmittel einen von dem ersten Kompressor getrennten zweiten Kompressor umfasst.

4. Kryostat-Mikrotom nach Anspruch 3, worin eines oder beide von dem Kühlkammerfluidversorgungsmittel und dem Probenkühlfluidversorgungsmittel zwei oder mehrere Kompressoren umfassen.

5. Kryostat-Mikrotom nach einem der Ansprüche 1 bis 4, worin das Probenkühlfluidversorgungsmittel in der Lage ist, auf eine Temperatur im Bereich von -30 °C bis -70 °C abzukühlen.

6. Kryostat-Mikrotom nach Anspruch 5, worin das Probenkühlfluidversorgungsmittel in der Lage ist, auf eine Temperatur im Bereich von -45 °C bis -65 °C abzukühlen.

7. Kryostat-Mikrotom nach einem der vorangegangenen Ansprüche, worin das Probenkühlmittel eine Gefrierplatte ist, die einen Block wärmeleitfähigen Materials in Wärmekontakt mit dem Probenkühlfluidversorgungsmittel umfasst.

8. Kryostat-Mikrotom nach einem der vorangegangenen Ansprüche, worin das Kryostat-Mikrotom ein Probenfixierplattformfluidversorgungsmittel zum Kühlen der Probenfixierplattform des Mikrotoms umfasst, worin das Probenfixierplattformfluidversorgungsmittel von dem Probenkühlfluidversorgungsmittel und dem Kühlkammerfluidversorgungsmittel getrennt ist.

9. Kryostat-Mikrotom nach einem der vorangegangenen Ansprüche, worin der Kryostat ein Kühlkammertemperaturregelungssteuerungsmittel zur Steuerung der Temperatur der Kühlkammer und Probenkühltemperaturregelungssteuerungsmittel zur Steuerung der Temperatur des Probenkühlmittels umfasst, worin die Temperatur der Kühlkammer und jene des Probenkühlmittels getrennt voneinander gesteuert werden können.

10. Verfahren zum Betreiben eines Kryostat-Mikrotoms nach einem der Ansprüche 1 bis 9, worin die Temperatur der Kühlkammer und die Temperatur des Probenkühlmittels getrennt voneinander gesteuert werden.

## Revendications

1. Microtome à cryostat comprenant :
une chambre de refroidissement ;
un étage de support d'échantillon et un dispositif de coupe, de sorte qu'à l'usage, un échantillon est monté sur le support d'échantillon pour être coupé par le dispositif de coupe ;
un moyen de refroidissement d'échantillon pour refroidir l'échantillon avant de le monter sur l'étage de support d'échantillon ;
un moyen d'alimentation en fluide de chambre de refroidissement pour abaisser la température dans la chambre de refroidissement ; et
un moyen d'alimentation en fluide de refroidissement d'échantillon pour abaisser la température du moyen de refroidissement d'échantillon, dans lequel le moyen d'alimentation en fluide de refroidissement d'échantillon est séparé du moyen d'alimentation en fluide de chambre de refroidissement.

2. Microtome à cryostat selon la revendication 1, dans lequel le moyen de refroidissement d'échantillon est positionné à l'intérieur de la chambre de refroidissement.

3. Microtome à cryostat selon la revendication 1 ou la revendication 2, dans lequel le moyen d'alimentation en fluide de refroidissement d'échantillon comprend un premier compresseur et le moyen d'alimentation en fluide de chambre de refroidissement comprend un second compresseur, séparé du premier compresseur.

4. Microtome à cryostat selon la revendication 3, dans lequel l'un ou l'autre ou les deux parmi le moyen d'alimentation en fluide de chambre de refroidissement et le moyen d'alimentation en fluide de refroidissement d'échantillon comprend (comprennent) deux ou plusieurs compresseurs.

5. Microtome à cryostat selon l'une quelconque des revendications 1 à 4, dans lequel le moyen d'alimentation en fluide de refroidissement d'échantillon peut refroidir jusqu'à une température dans la plage de - 30°C à - 70°C.

6. Microtome à cryostat selon la revendication 5, dans lequel le moyen d'alimentation en fluide de refroidissement d'échantillon peut refroidir jusqu'à une température dans la plage de - 45°C à - 65°C.

7. Microtome à cryostat selon l'une quelconque des revendications précédentes, dans lequel le moyen de refroidissement d'échantillon est une plaque de congélation comprenant un bloc de matériau thermiquement conducteur en contact thermique avec le moyen d'alimentation en fluide de refroidissement d'échantillon.

8. Microtome à cryostat selon l'une quelconque des revendications précédentes, dans lequel le microtome à cryostat comprend un moyen d'alimentation en fluide d'étage de support d'échantillon pour refroidir l'étage de support d'échantillon du microtome, dans lequel le moyen d'alimentation en fluide d'étage de support d'échantillon est séparé du moyen d'alimentation en fluide de refroidissement d'échantillon et du moyen d'alimentation en fluide de chambre de refroidissement.

9. Microtome à cryostat selon l'une quelconque des revendications précédentes, dans lequel le cryostat comprend un moyen de commande de régulation de température de chambre de refroidissement pour réguler la température de la chambre de refroidissement et un moyen de commande de régulation de température de refroidissement d'échantillon pour réguler la température du moyen de refroidissement d'échantillon, dans lequel la température de la chambre de refroidissement et la température du moyen de refroidissement d'échantillon peuvent être régulées séparément.

10. Procédé pour faire fonctionner un microtome à cryostat selon l'une quelconque des revendications 1 à 9, dans lequel la température de la chambre de refroidissement et la température du moyen de refroidissement d'échantillon sont régulées séparément.
